# EUROPEAN PATENT APPLICATION

(11) **EP 2 204 767 A1**
(43) Date of publication of application: **07.07.2010**
(21) Application number: 09167504.1
(22) Date of filing: 07.08.2009
(51) Int. Cl.: G06Q 30/00

(54) **Electronic display medium and electronic display system**

(30) Priority: 11.08.2008 JP 2008206846
(71) Applicant: ISHIDA CO., Ltd., Kyoto-shi, Kyoto 606-8392 (JP)
(72) Inventor: Mizukawa, Shigemitsu, Shiga 520-3026 (JP); Nobutsugu, Hideo, Shiga 520-3026 (JP); Konishi, Hiroyuki, Shiga 520-3026 (JP)
(74) Representative: Kastel, Stefan

(57) **Abstract**

An electronic display medium includes a display component and a notification device. The display component is configured to display a display content. The notification device is configured to issue at least one of a visual notification output and an auditory notification output indicative of a display change on the display component to a user of the electronic display medium when the display content displayed on the display component is updated.

## Description

### CROSS-REFERENCE TO RELATED APPLICATIONS

This application claims priority to Japanese Patent Application No. 2008-206846 filed on August 11, 2008. The entire disclosure of Japanese Patent Application No. 2008-206846 is hereby incorporated herein by reference.

### BACKGROUND

### Technical Field

The present invention relates to an electronic display medium for displaying data, and an electronic display system comprising the electronic display medium.

### Related Art

Electronic display media have been conventionally used in a variety of systems. The electronic shelf label system (ESL system) disclosed in Japanese Laid-Open Patent Publication No. 2004-265196, for example, makes use of an electronic display medium, referred to as an electronic shelf label, for displaying product data related to product, such as sales price. Japanese Patent No. 3560988 also describes ESL system-related technology for simultaneously changing the information displayed on a plurality of electronic display modules.

### SUMMARY

When the display on the electronic display medium is changed, workers sometimes cannot easily ascertain whether or not the display has actually been changed on the electronic display medium. For example, when part of the display on the electronic display medium is changed or there is not much difference between the display contents before and after the change, it is difficult for workers to tell whether or not the display was changed by looking at the display of the electronic display medium. Workers therefore sometimes again change the display on the electronic display medium even though the display on the electronic display medium has already been changed, resulting in lower working efficiency. In addition, when the display on the electronic display medium is not actually changed as a result of mistakes in the change of display, the display may remain unchanged, and it may not be possible to provide proper data to users of the data displayed by the electronic display medium. This problem is particularly pronounced in systems, such as in the ESL system noted above, that make use of large quantities of electronic display media because displays are changed for quite a large number of objects.

Accordingly, an object of the present invention is to provide a technique allowing it to be easily ascertained whether or not a display on an electronic display medium has actually been changed.

To solve the abovementioned problems, an electronic display medium according to the first aspect of the present invention includes a display component and a notification device. The display component is configured to display a display content. The notification device is configured to issue at least one of a visual notification output and an auditory notification output indicative of a display change on the display component to a user of the electronic display medium when the display content displayed on the display component is updated.

An electronic display system according to the second aspect of the present invention includes an electronic display medium and a data distribution device. The electronic display medium is configured to display a display content. The data distribution device is configured to distribute data relating to the display content to the electronic display medium. The electronic display medium is configured to change the display content based on the data distributed from the data distribution device, and to issue at least one of a visual notification output and an auditory notification output indicative of a display change on the electronic display medium to a user when the display content displayed on the electronic display medium is updated.

### BRIEF DESCRIPTION OF THE DRAWINGS

Referring now to the attached drawings which form a part of this original disclosure:

FIG. 1 is a schematic illustration showing how the electronic shelf labels of the electronic shelf label system according to a first embodiment of the present invention are arranged.

FIG. 2 is a block diagram showing the configuration of a store data system including the electronic shelf label system according to the first embodiment of the present invention.

FIG. 3 is a block diagram showing the configuration of the ESL server according to the first embodiment of the present invention.

FIG. 4 is a table showing an example of a product file.

FIG. 5 is a diagrammatic view of the electronic shelf label according to the first embodiment of the present invention.

FIG. 6 is a block diagram showing the configuration of the data processing terminal according to the first embodiment of the present invention.

FIG. 7 is a flow chart showing the operations of the store data system according to the first embodiment of the present invention.

FIG. 8 a diagrammatic view of the electronic shelf label showing an example of display of a display-change notification on the electronic shelf label according to the first embodiment of the present invention.

FIG. 9 a diagrammatic view of the electronic shelf label showing another example of display of a display-change notification on the electronic shelf label according to the first embodiment of the present invention.

FIG. 10 a diagrammatic view of the electronic shelf label showing another example of display of a display-change notification on the electronic shelf label according to the first embodiment of the present invention.

FIG. 11 shows a diagrammatic view of the electronic shelf label showing another example of display of a display-change notification on the electronic shelf label according to the first embodiment of the present invention.

FIG. 12 a diagrammatic view of the electronic shelf label showing another example of display of a display-change notification on the electronic shelf label according to the first embodiment of the present invention.

FIG. 13 is a flow chart showing the operations of the electronic shelf label system according to the first embodiment of the present invention.

FIG. 14 is a table showing an example of a change verification list file.

FIG. 15 is a schematic diagram showing the configuration of a work support system according to a second embodiment of the present invention.

FIG. 16 is a diagrammatic view of an electronic display medium according to the second embodiment of the present invention.

FIG. 17 is a flow chart for illustrating the operations of the work support system according to the second embodiment of the present invention.

FIG. 18 is a flow chart for illustrating the operations of the work support system according to the second embodiment of the present invention.

FIG. 19 is a flow chart for illustrating the operations of a modification of the work support system according to the second embodiment of the present invention.

FIG. 20 is a flow chart for illustrating the operations of a modification of the work support system according to the second embodiment of the present invention.

### DETAILED DESCRIPTION OF EXEMPLARY EMBODIMENTS

Embodiments of the electronic display system pertaining to the present invention are described below with reference to the drawings.

### FIRST EMBODIMENT

A store data system including an electronic display system that is used in stores such as supermarkets or convenience stores, specifically, an electronic shelf label (ESL) system, is described in this embodiment.

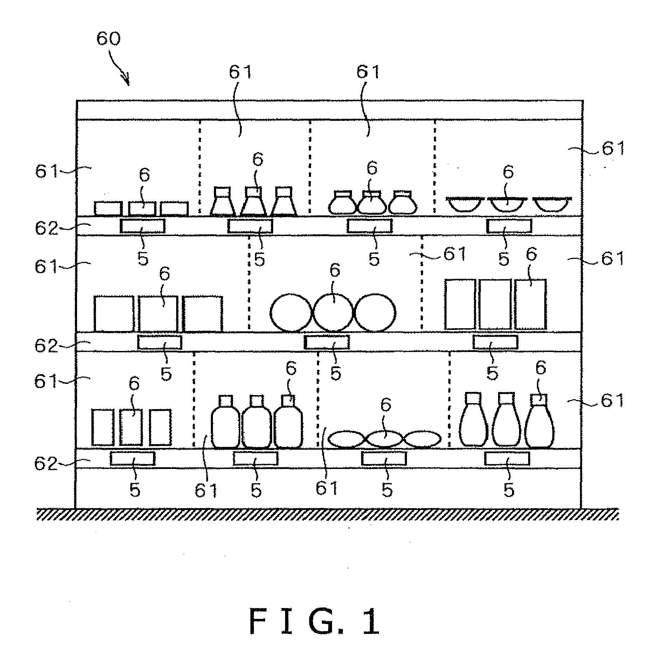

FIG. 1 shows how the electronic shelf labels 5 of the electronic shelf label system 1 related to the present embodiment are arranged on a store shelf 60 in a store. In this electronic shelf label system 1, electronic shelf labels 5 are arranged for each item of product 6. The electronic shelf labels 5 serve as portable electronic display media which displays product data such as sales price. Communication signals including sales price data based on a product master (master data) are transmitted to each electronic shelf label 5 from a distribution device. The distribution device is configured to distribute data. The price is then displayed on the electronic shelf label 5. The electronic shelf labels 5 thus display the correct sales price matching the sales price at check out, and the correct sales price is conveyed to customers.

As shown in FIG. 1, the product shelf 60 is divided into spaces referred to as faces 61. Items of product 6 of the same type are placed together in each of the faces 61. Each item of product 6 is labeled or printed with a bar code showing a product code. The product code serves as product identification data for identifying types of product.

The electronic shelf labels 5 are attached to the frames 62 of the store shelf 60 at locations corresponding to each of the faces 61. That is, one electronic shelf label 5 corresponds to one item of product 6 (one type of product, to be exact), and each electronic shelf label 5 is disposed in the location of the item of product 6 to which each device corresponds. Each electronic shelf label 5 has its own respective display, and the sales price of the item of product 6 to which the device corresponds is displayed on the display. The sales price of the item of product 6 is thus conveyed to consumers.

When the item of product 6 is rearranged, the location and size of the faces 61 are also changed. In order to adapt to such changes in the faces 61, the positions of the electronic shelf labels 5 are not fixed, and the electronic shelf labels 5 can be detached from the frames 62 and relocated in other positions. In the present embodiment, store shelf 60 as shown in FIG. 1 is arranged in the multiple selling space inside the store.

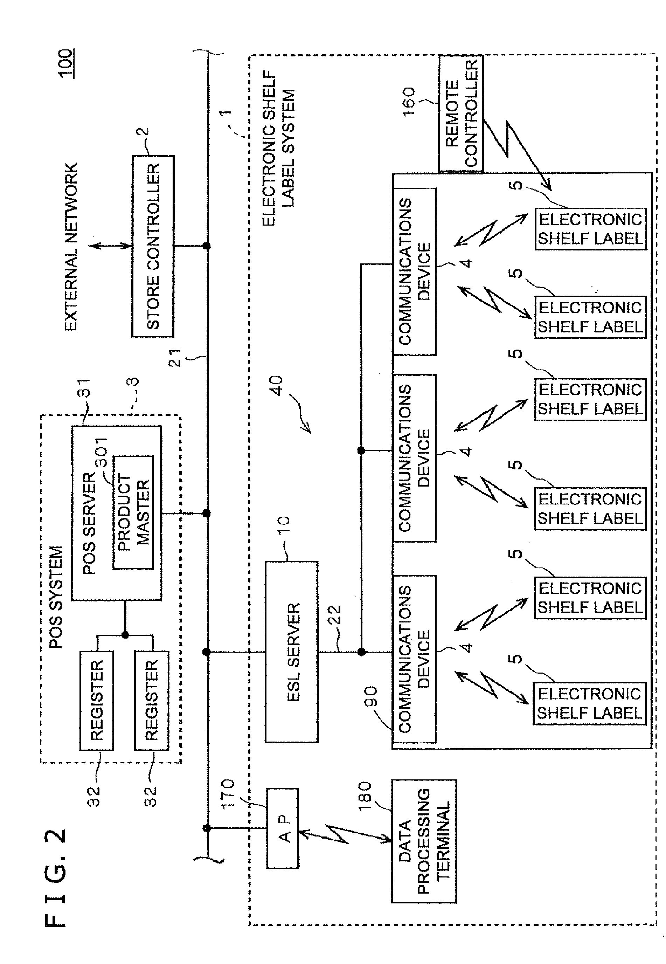

FIG. 2 shows an example of the structure of a store data system 100, including an electronic shelf label system 1, used in stores. As shown in FIG. 2, the store data system 100 comprises a store controller 2 and POS system 3 as well as the electronic shelf label system 1. The POS system 3 has a POS server 31. The electronic shelf label system 1 has an ESL server 10. The POS server 31 and The ESL server 10 are connected via a LAN 21 to the store controller 2. Data can thus be communicated between the store controller 2, POS system 3, and electronic shelf label system 1.

The store controller 2 is composed of a common computer. The store controller 2 functions as a device for comprehensively managing the store data system 100. The store controller 2 is also connected to an external network such as the Internet. The store controller 2 can communicate through the external network with a computer such as a server located at a main center for supervising stores.

The POS system 3 is a system configured to collect and analyze sales price-related data for items of product 6 at the point of sale. The POS system 3 comprises a POS server 31 and a plurality of registers 32. The POS server 31 is configured to comprehensively manage the POS system 3. The plurality of registers 32 is configured to check out items of product 6. The POS server 31 is connected to the registers 32 by a dedicated communications cable.

The POS server 31 is composed of a common computer. The hard disk of the POS server 31 stores the product master 301. The product master 301 shows the various types of data related to items of product 6, such as sales price. Each of the plurality of registers 32 checks out the item of product 6 based on the sales prices stored in the product master 301.

Data related to all items of product 6 in the store is integrally managed by the product master 301. The data written to the product master 301 includes product codes, product names, ordinary prices, special prices, special sales periods, origin of the item of product 6, number sold, inventory, number ordered (the number to be delivered per order), and sales units of the item of product 6. The product names are the names of the items of product 6. The ordinary prices are the ordinary sales prices. The special prices are special sales prices. The special sales periods are periods in which special sales are held. The product data written to the product master 301 is usually changed (updated) based on instructions from the main center computer (data received by store controller 2), but the POS server 31 can also be directly operated to change product data.

The electronic shelf label system 1 comprises the above plurality of electronic shelf labels 5, a distribution device 40, a portable remote control 160, and a portable data processing terminal 180. The distribution device 40 is configured to distribute the sales price and the like of the item of product 6 that is to be displayed on the electronic shelf labels 5. The portable remote control 160 is used when switching the data displayed on the electronic shelf labels 5. The portable data processing terminal 180 is used, for example, to update the sales prices displayed by the electronic shelf labels 5. The remote control 160 outputs an infrared signal. The infrared signal is received by an electronic shelf label 5. The display screen of the relevant electronic shelf label 5 is thereby switched.

The distribution device 40 comprises the ESL server 10 and a plurality of communications devices 4. The ESL server 10 is a server configured to comprehensively manage the electronic shelf label system 1. The ESL server 10 is connected to the plurality of communications devices 4 by a dedicated communications cable 22, allowing data to be communicated between them. Each of the communications devices 4 communicates with the electronic shelf labels 5 by infrared communication. The plurality of communications devices 4 are arranged at approximately fixed distances on the ceiling or the like of the selling space 90 so that the plurality of communications devices 4 can communicate with all the electronic shelf labels 5 arranged inside the selling space 90.

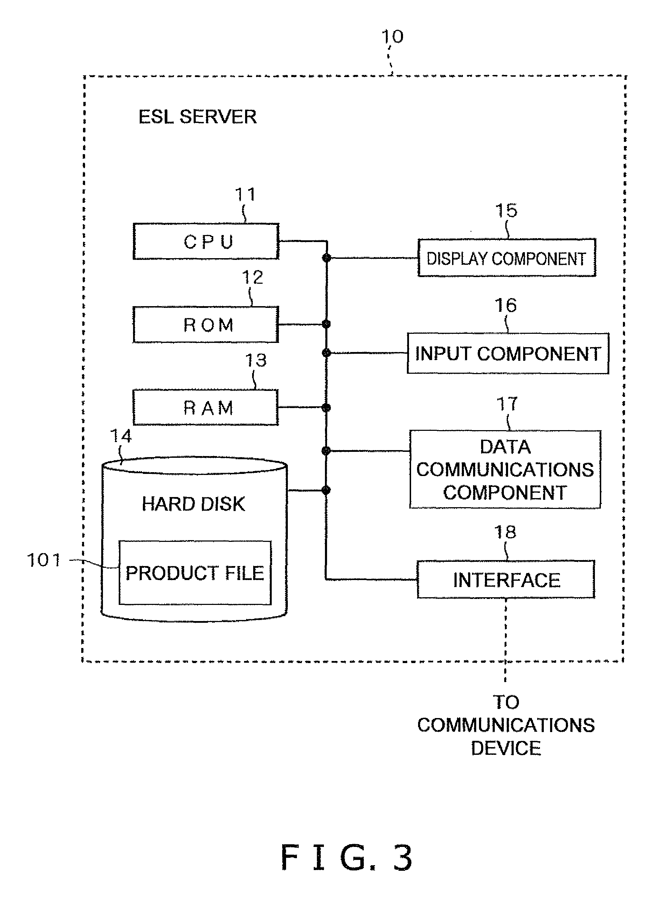

The ESL server 10 is located in a back yard which is a room separate from the selling space 90 inside the store. FIG. 3 shows the basic structure of the ESL server 10. The hardware structure of the ESL server 10 is the same as that of a common computer. As shown in FIG. 3, the ESL server 10 is composed of a CPU 11, a ROM 12, a RAM 13, a hard disk 14, a display 15, an input component 16, a data communications component 17, and an interface 18. The CPU 11 is configured to execute various computer processes. The ROM 12 is configured to store basic programs. The RAM 13 is configured to serve as a working area for computer processing. The hard disk 14 is configured to store programs or various data files, etc. The display 15 is configured for various types of displays. The input component 16 is composed of a keyboard and mouse, etc. The data communications component 17 has communication functions via a LAN 21. The interface 18 is configured to communicate with the communications devices 4. Data that is to be transmitted to the electronic shelf labels 5 is conveyed through the interface 18 to the communications devices 4.

A dedicated program is pre-stored on the hard disk 14 of the ESL server 10 The CPU 11 executes computer processes in accordance with the program, whereby the various functions of the ESL server 10 are implemented. Product file 101 is also stored on the hard disk 14 of the ESL server 10. The Product fire 10 1 is a data file showing various types of product-related data.

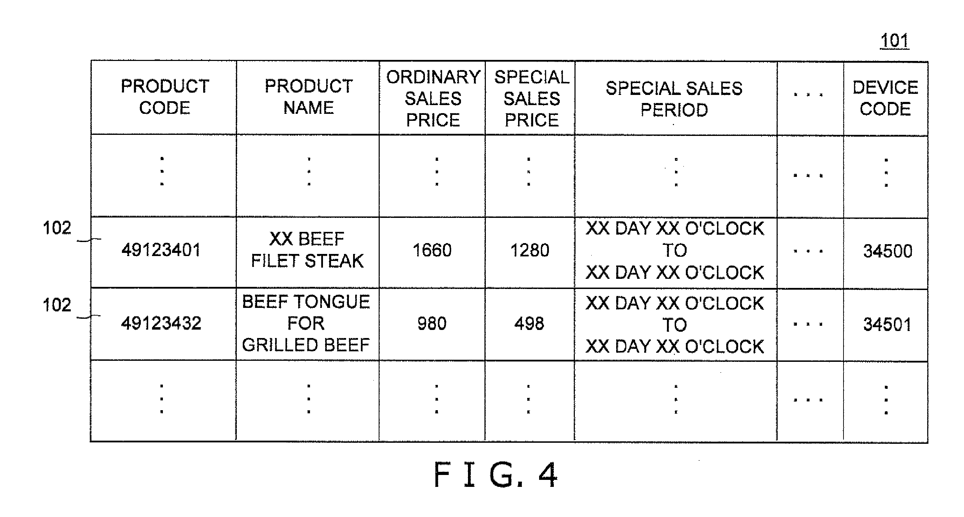

FIG. 4 shows an example of a product file 101. As shown in FIG. 4, the product file 101 is in table format. Each of the records 102 shows data related to one product. Specifically, the product code, product name, ordinary sales price, special sales price, special sales period, origin of the item of product 6, number sold, inventory, number ordered, and sales units of items of product 6, etc., are recorded in each record 102. This data is the same data as that in the product master 301 stored in the above POS system 3, and is registered by communication between the ESL server 10 and POS system 3 based on the data in the product master 301. The content of the data in the product file 101 and the data in the product master 301 thus match.

In each record 102 of the product file 101, a device code is also registered. The device code is hardware identification data specific to each of the plurality of the electronic shelf labels 5 of the electronic shelf label system 1. This results in a one-to-one data association (linkage) between the item of product 6 and electronic shelf label 5. The device code is used so that the sales price of certain items of product 6 is transmitted to the electronic shelf label 5 corresponding to that item of product 6.

In the ESL server 10 having the above structure, transmission data to be transmitted to the electronic shelf labels 5 is produced by the CPU 11, and the transmission data is output through the interface 18 to the communications devices 4. The communications devices 4 output infrared signals containing the input transmission data; i.e., infrared signals modulated with the transmission data, to the electronic shelf labels 5 with which each can communicate. The same transmission data is thus input from the distribution device 40 to the electronic shelf labels 5 arranged in the selling space 90. The transmission data transmitted from the ESL server 10 includes the product data, such as the ordinary sales price or special sales price, and the device code, etc., in the product file 101.

An access point (AP) 170 is also connected to the LAN 21. The access point (AP) is a radio wave repeater for a wireless LAN. The data processing terminal 180 can be connected through the access point 170 to the LAN 21. The data processing terminal 180 can thus communicate with the store controller 2, the POS server 31, and the ESL 10 through the LAN 21. The data processing terminal 180 is described in detail below.

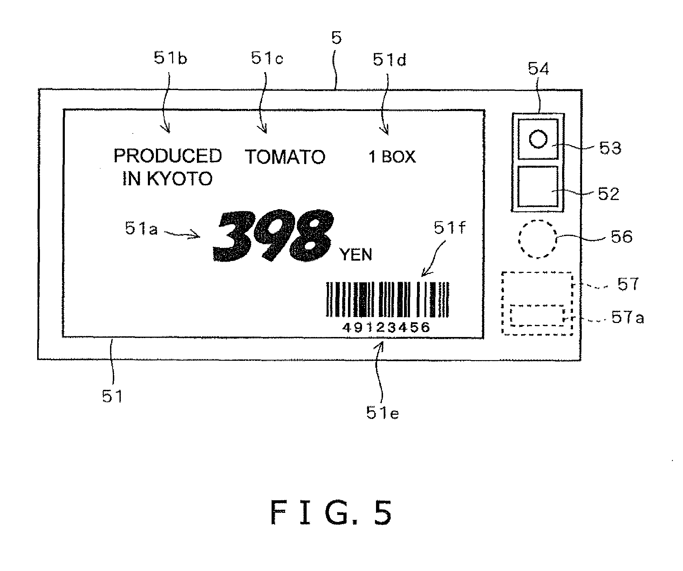

The structure of the electronic shelf label 5 will be described in detail next. FIG. 5 shows the structure of the electronic shelf label 5. As shown in FIG. 5, the electronic shelf label 5 has a display component 51 and a communications component 54. The display component 51 and the communication component 54 are disposed on the front surface of the electronic shelf label 5. The display component 51 is configured to display various types of data. The communications component 54 is configured to communicate with the distribution device 40.

The communications component 54 comprises a light-emitting component 52 and a light-receiving component 53. The light-emitting component 52 is configured to output infrared signals. The light-receiving component 53 is configured to receive infrared signals from the communications devices 4, the remote control 160 and the data processing terminal 180. The light-receiving component 53 is configured to convert the infrared signals to electrical signals and output them. The light-emitting component 52, which functions as a transmission component for transmitting data, is composed of an LED, for example. The light-receiving component 53, which functions as a receiving component for receiving data, is composed of a photodiode and an amplifier, for example.

The display component 51 is a dot matrix type of nonvolatile display component, which is composed of electronic paper, for example, wherein the display screen is composed of a plurality of pixels arranged in the form of a matrix. The nonvolatile display components such as electronic paper can keep the display contents without drive power. Because the display component 51 is a dot matrix type of display component, not only numbers showing the price of the item of product 6, but also characters, symbols, graphics, and the like can be displayed.

As shown in FIG. 5, the display component 51 shows the sales price 51a of the item of product 6 with which the device is associated, the origin 51b of the item of product 6, the product name 51c, and sales unit 51d. The display component 51 also displays a character string 51e numerically representing the product code and a bar code 51f indicating the product code adjacent to each other in the direction in which the bar code 51f extends. The product name 51c and product code (character string 51e and bar code 51f) are data capable of identifying the item of product 6 (referred to below as "product identification data"). When the product identification data is not displayed and only the sales price 51a is displayed on the display component 51, it is difficult to ascertain which electronic shelf label 5 is associated with which item of product 6, but the display of such product identification data allows the electronic shelf label 5 and item of product 6 to be visually associated.

The electronic shelf label 5 has a small battery 56 and a control component 57. The small battery 56 and the control component 57 are provided inside the electronic shelf label 5. The small battery 56 is configured to supply power for the electronic shelf label 5. The control component 57 is configured to comprehensively control the operation of the electronic shelf label 5. The control component 57 is composed of a CPU or a memory 57a, etc. The memory 57a stores various types of data, such as the sales price or product name to be displayed on the display component 51, and the device code of the device. The infrared signal output from the communications device 4 is converted to an electrical signal in the communications component 54 and then input to the control component 57. The control component 57 demodulates the input electrical signal to obtain the data transmitted from the ESL server, and data such as the sales price or product name included in the transmitted data are temporarily stored in the memory 57a. The control component 57 controls the display component 51 to display the various types of data in the memory 57a on the display component 51. In this way, the control component 57 functions as a display control component for controlling the display on the display component 51.

The electronic shelf label 5 also can switch the data displayed on the display component 51, and, as noted above, the electronic shelf label 5 can display the sales price of the item of product 6 as well as the number sold, number ordered, special sale periods, and the like. The data displayed on the display component 51 is switched according to the type of infrared signal output from the remote control 160. The remote control 160 has a plurality of operating buttons (not shown). Responding to the external operation of the operating buttons, numerous types of infrared signals can be transmitted. When the infrared signal transmitted from the remote control 160 is received by the light-receiving component 53 of the electronic shelf label 5, the control component 57 of the electronic shelf label 5 switches the data displayed on the display component 51 according to the type of infrared signal received by the light-receiving component 53. For example, the data displayed on the display component 51 is switched from the data displayed in FIG. 5 to the number of items of product 6 sold. The data displayed on the display component 51 can also be switched by infrared signals transmitted from the data processing terminal 180.

### BASIC OPERATION OF ELECTRONIC SHELF LABEL SYSTEM

The operation of the electronic shelf label system 1 up to the display of the product data such as sales price on the electronic shelf label 5 is described next. In this electronic shelf label system 1, product data is distributed from the distribution device 40 to the electronic shelf labels 5 when the system is started up and when the sales prices displayed on the electronic shelf labels 5 are updated, etc. As used here, times when the sales prices are updated include when the ordinary sales prices in the product master 301 are changed and when sales prices are changed from ordinary sales prices to special sales prices during special sales. At system start up, the product data is distributed to all the electronic shelf labels 5 in the store. On the other hand, when sales prices are updated, product data is distributed only to the electronic shelf labels 5 corresponding to the target item of product 6. The sales price displayed on the electronic shelf labels 5 and the sales price upon checkout at the registers 32 will thus always match. The operations involved in the distribution of product data for an item of product 6 are described below. In the following description, the item of product 6 which is the object of the product data being distributed will be referred to as the "target item of product 6."

First, the record 102 related to the target item of product 6 in the product file 101 1 is referenced by the CPU 11 of the ESL server 10 in the communications device 40 to obtain product data such as the sales price (ordinary sales price or special sales price), product code, and product name, and the device code. The device code obtained here is the device code of the electronic shelf label 5 corresponding to the target item of product 6, and the product data that is obtained is also the product data which is to be displayed by that electronic shelf label 5. The product data and the device code are transmitted as an electrical signal from the ESL server 10 via the communications cable 22 to the communications devices 4.

Here, when the product data and device code are transmitted from the ESL server 10 to the communications devices 4, the CPU 11 produces image data composed of pixel data for all of the numerous pixels forming the display screen in the display component 51 of the electronic shelf label 5 corresponding to the target item of product 6. In other words, the CPU 11 produces image data showing images displayed on the entire display screen of the electronic shelf label 5. The CPU 11 inputs the product data and the device code obtained from the product file 101 to the communications devices 4 by transmitting transmission data including the image data that has been produced and the device code to the communications devices 4. The communications devices 4 then output infrared data modulated with the transmission data from the ESL server 10.

Thus, in the present embodiment, the product data distributed to the electronic shelf label 5 is transmitted from the distribution device 40 to the relevant electronic shelf label 5 in the form of image data composed of pixel data for all the pixels of the display screen of the relevant electronic shelf label 5. There is accordingly no need for the electronic shelf labels 5 to produce the image data for the images which they themselves display. The circuit structure of the electronic shelf labels 5 can thus be simplified, and the costs associated with the large quantities of electronic shelf labels 5 used in stores can be reduced.

The infrared signals output from the communications devices 4 are received by the communications components 54 of the electronic shelf labels 5, and are converted to electrical signals. The control component 57 demodulates the electrical signals obtained by the communications components 54 to obtain the transmission data from the ESL server 10.

The control component 57 then determines whether or not the device code in the transmission data that has been obtained matches the device code of the device which has been pre-stored in the memory 57a. When the device code that is obtained does not match the device code of the device which has been pre-stored in the memory 57a, the control component 57 determines that the infrared signal that has been received is a signal for another electronic shelf label 5, and terminates the process. On the other hand, when the device code that has been obtained does match the device code of the device which has been pre-stored in the memory 57a, the control component 57 determines that the infrared signal that has been received is a signal for the device, controls the display component 51 based on the image data in the transmission data that has been obtained, and displays the product data from the ESL server 10 on the display component 51. The display as in FIG. 5 is thus enabled on the electronic shelf label 5.

When the product data from the ESL server 10 is displayed on the display component 51, the control component 57 causes the light-emitting component 52 to output infrared signals including data that indicates the transmission data from the ESL server 10 has been properly received (referred to below as "ACK data"). The infrared signal is received by the communications devices 4, and the ACK data included in the infrared signal is transmitted to the ESL server 10. The ESL server 10 of the distribution device 40 can thus confirm whether or not the distributed product data has been properly received by the electronic shelf label 5. When, for example, no infrared signal including the ACK data is output from the electronic shelf label 5, a process can thus take place wherein it is determined that the distributed product data has not been properly received by the electronic shelf label 5, and the ESL server 10 repeatedly distributes the product data until the infrared signal is answered. The display on the electronic shelf labels 5 can thus be updated in a reliable manner, and system reliability can be vastly improved.

### UPDATING PRODUCT DATA DISPLAYED BY ELECTRONIC SHELF LABELS

As noted above, in the store data system 100 related to the present embodiment, the product data in the product master 301 of the POS server 31 is changed based on instructions received by the store controller 2 from the main center, or is changed through the direct operation of the POS server 31. In other words, the store controller 2 transmits new product data issued by notification from the main center to the POS server 31, or the new product data is directly input to the POS server 31, and the POS server 31 rewrites certain product data in the product master 301 to the newly input product data. When the product data in the product master 301 is changed, the ESL server 10 is notified of the changed product data by the POS server 31, and the ESL server 10 changes the product data in the product file 101 so as to match the product data received through the notification. When the product data from among the product file 101 that is to be displayed on certain electronic shelf labels 5 is changed, the ESL server 10 transmits the changed product data via the communications devices 4 to the electronic shelf labels 5, and the product data displayed on the relevant electronic shelf labels 5 is updated.

The product data displayed by the electronic shelf labels 5 is thus updated based on instructions from the main center or is updated through the direct operation of the POS server 31. In the present embodiment, the product data transmitted from the store controller 2 or POS server 31 is distributed via the distribution device 40 to the electronic shelf labels 5, and the distribution device 40 as well as the store controller 2 and POS server 31 can thus be regarded as data distribution devices for distributing product data to the electronic shelf labels 5.

The aforementioned data processing terminal 180 can also be used to change the product data displayed by the electronic shelf labels 5 in the present embodiment.

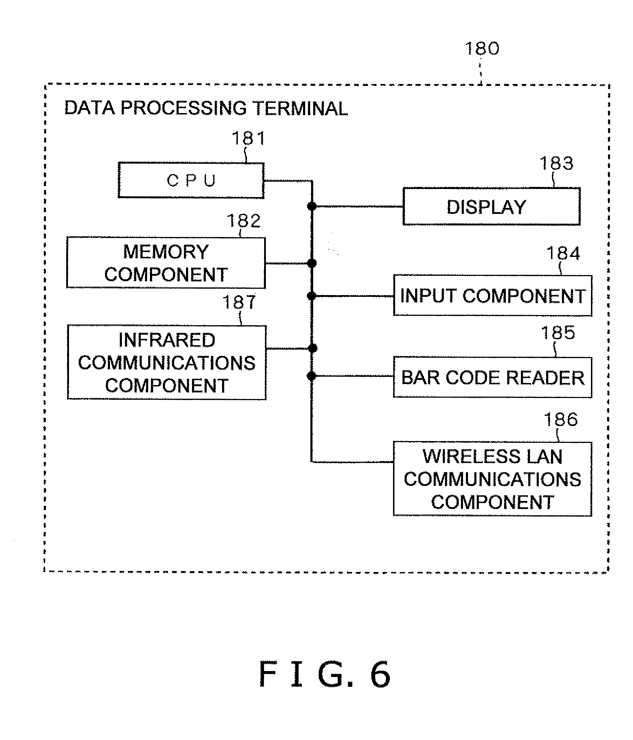

FIG. 6 shows the structure of the data processing terminal 180. As shown in FIG. 6, the data processing terminal 180 comprises a CPU 181, a memory component 182, a display 183, an input component 184, a bar code reader 185, and a wireless LAN communications component 186. The CPU 181 is configured to execute various computing processes. The memory component 182 is composed of ROM or RAM, etc. The memory component 182 is configured to store various types of data. The display 183 is configured for various types of display. The input component 184 is composed of a plurality of operating buttons for receiving input from outside. The bar code reader 185 is configured to obtain data shown by bar codes. The wireless LAN communications component 186 has a data communications function based on wireless communications using a wireless LAN.

The data processing terminal 180 can communicate data between the store controller 2, POS server 31, and ESL server 10 via the AP 170 and LAN 21 using the functions of the wireless LAN communications component 186. The data processing terminal 180 also comprises an infrared communications component 187, and can transmit various infrared signals to the light-receiving component 53 of the electronic shelf labels 5. This kind of data processing terminal 180 may be constructed as a dedicated portable device such as a handy terminal, and may be composed of a general portable computer such as a notebook computer or PDA to which a bar code reader is attached.

A dedicated program is pre-stored in the memory component 182 of the data processing terminal 180, and the CPU 181 executes computer processes in accordance with the program, whereby functions for updating the product data displayed by the electronic shelf labels 5 and the like are implemented.

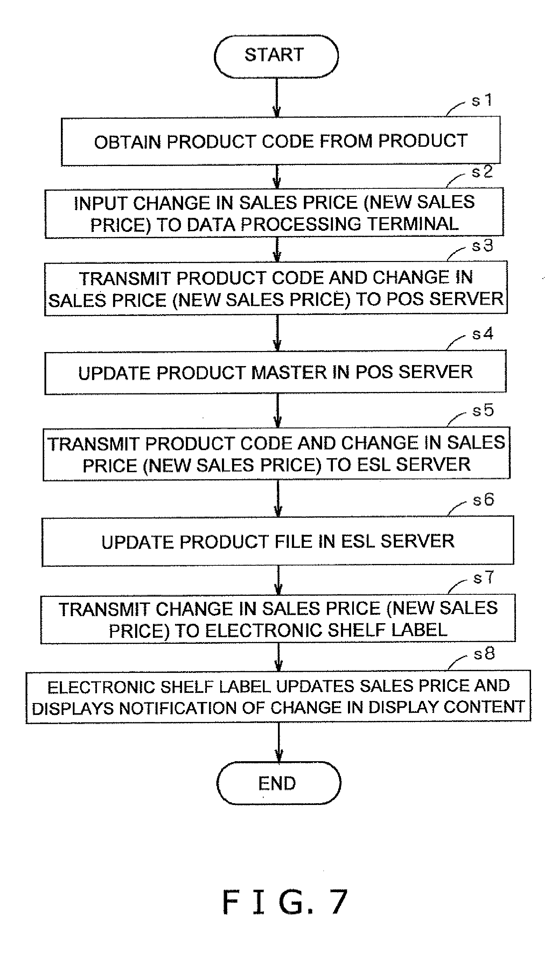

FIG. 7 is a flow chart showing the operation of this store data system 100 when the product data displayed by the electronic shelf labels 5 is updated using the data processing terminal 180. The operation of the store data system 100 when sales prices are updated is described as an example below. The electronic shelf label 5 for which the displayed product data is to be updated will be referred to below as the "target electronic shelf label 5."

First, when a worker undertakes the prescribed operation of the input component 184 of the data processing terminal 180 functioning as the operating component operated by the worker, the input component 184 inputs operating data to the CPU 181. The CPU 181 then sets the processing mode of the data processing terminal 180 to "sales price update mode" for updating sales prices.

When the worker then uses the bar code reader 185 of the data processing terminal 180 to read the bar code attached to the item of product 6 corresponding to the target electronic shelf label 5, the product code is obtained from the item of product 6 and input to the CPU 181 (Step s1)

When the worker then inputs the change in sales price (i.e. new sales price) to the input component 184 of the data processing terminal 180, the input component 184 receives the input of the change in sales price and inputs it to the CPU 181 (Step s2). The product code and change in sales price input to the CPU 181 are transmitted from the wireless LAN communications component 186 through the AP 170 to the POS server 31 (step s3).

The POS server 31 rewrites the sales price of the item of product 6, identified by the product code that has been received, in the product master 301 to the change in sales price that has been received (step s4). The POS server 31 then transmits the received product code and change in sales price through the LAN 21 to the ESL server 10 (step s5).

In the ESL server 10, the product code and change in sales price from the POS server 31 are received by the data communications component 17 and input to the CPU 11. The CPU 11 rewrites, in the product file 101, the sales price of the item of product 6 identified by the input product code to the change in sales price that has been input, and updates the product file 101 (step s6). The CPU 11 then obtains the device code associated with the input product code, that is, the device code of the target electronic shelf label 5, from the product file 101. The CPU 11 of the ESL server 10 then transmits the change in sales price that has been input and the device code of the target electronic shelf label 5 to the communications devices 4. At this time, the CPU 11 produces pixel data for all of the numerous pixels forming the display screen of the display component 51 of the electronic shelf label 5, and transmits transmission data including the image data composed of the pixel data and the device code. The communications devices 4 transmit infrared signals modulated with the received transmission data (step s7).

Even when only the sales price out of the various types of product data displayed by the electronic shelf label 5 is thus updated in the present embodiment, pixel data is produced for all of the numerous pixels forming the display screen of the display component 51 of the relevant electronic shelf label 5 and is transmitted to the relevant electronic shelf label 5. In other words, image data showing the change in sales price as well as image data showing the currently displayed product name, origin, sales unit, and product code are transmitted to the relevant electronic shelf label 5.

When the device code in the transmission data included in the received infrared signals matches the device code stored in the memory 57a, the control component 57 of the target electronic shelf label 5 obtains the image data in the transmission data. The control component 57 then controls the display component 51 based on the image data that has been obtained. The display component 51 thus displays the origin, product name, sales unit, and product code which are the same as thus far, and displays the change in sales price received through notification from the ESL server 10. The sales price 51a displayed on the display component 51 is thus updated, and the display by the display component 51 is updated (step s8). The target electronic shelf label 5 then transmits infrared signals including the ACK data, and the ACK data is input to the ESL server 10.

The portable data processing terminal 180 can be used in this way to change the display content of the electronic shelf label 5, thereby allowing workers to easily change the display content of the electronic shelf labels 5.

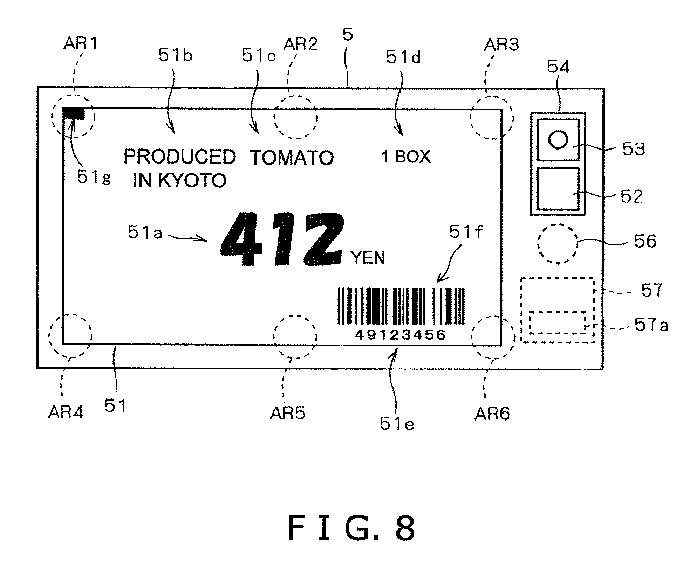

In the present embodiment, the display component 51 changes the display (display content) by changing the sales price displayed thereon, and displays a display-change notification for issuing a visual notification output indicative of the display change. FIG. 8 shows an example of the display-change notification that appears on the display component 51. In the example in FIG. 8, the display component 51 displays the display-change notification that is a solid square graphic 51g. The location where the graphic 51g is displayed varies according to the time when the display content (e.g., the sales price) of the display component 51 was changed. For example, the graphic 51g is displayed in the area AR1 when the display content of the display component 51 is changed between 9:00 AM and 12:00 PM, in the area AR2 when changed between 12:00 PM and 3:00 PM, in the area AR3 when changed between 3:00 PM and 6:00 PM, in the area AR4 when changed between 6:00 PM and 9:00 PM, in the area AR5 when changed between 9:00 PM and 12:00 AM, and in the area AR6 when changed between 12:00 AM and 9:00 AM.

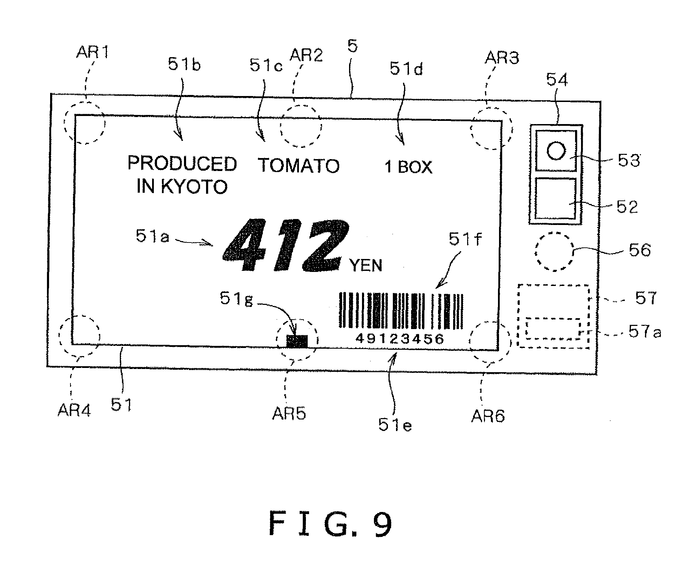

The areas AR1 through AR6 are the areas in the upper left corner, upper middle, upper right corner, lower left corner, lower middle, and lower right corner, respectively, of the display screen, when the display screen of the display component 51 is viewed from the front. In the example in FIG. 8, the graphic 51g is displayed in the area AR1, and a worker can thus see by looking at the display in FIG. 8 that the display content of the display component 51 was changed between 9:00 AM and 12:00 PM. When the display content of the display component 51 is changed after 9:00 PM and before 12:00 AM, the graphic 51g is displayed in the area AR5, as shown in FIG. 9.

Such display-change notifications may be displayed by transmitting image data showing the image shown in FIG. 8 or FIG. 9 from the distribution device 40 to the electronic shelf label 5 in step s7. The ESL server 10 has a timer (not shown) for keeping the current time. The CPU 11 updates the product file 101 in step s6 and obtains the current time from the timer. Using the current time that has been obtained as the time when the display is subsequently changed in the electronic shelf label 5, the CPU 11 produces image data (image data showing the image shown in FIG. 8 or FIG. 9) according to the time of the relevant display change and transmits the data through the communications devices 4 to the target electronic shelf label 5. The graphic 51g is thus displayed according to the time when the display content was changed on the display component 51.

In the examples in FIG. 8 and FIG. 9 here, the same graphic 51g is always displayed when a display-change notification is displayed on the electronic shelf label 5, and workers may therefore be unable to distinguish whether the display content was changed today or whether the display content had been changed yesterday in cases where the sales prices on the electronic shelf labels 5 are changed at the same times each day by a timer service or the like.

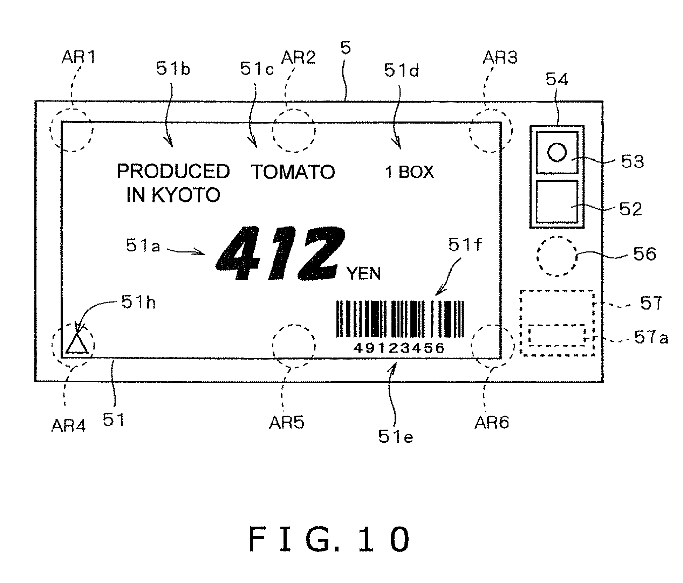

The graphics that are displayed when display-change notifications are displayed can then be changed according to the day of the week on which the display content of the electronic shelf label 5 is changed. In other words, different graphics are assigned for each of Monday through Sunday, and the graphic assigned to the day on which the display content of the electronic shelf label 5 is changed will be displayed on the relevant electronic shelf label 5. For example, a solid square, solid circle, solid triangle, hollow square, hollow circle, hollow triangle, or solid inverted triangle are respectively assigned to Monday through Sunday. FIG. 10 shows an example of the display-change notification that appears on the display component 51 in such cases. In FIG. 10, a hollow triangle graphic 51h (the display-change notification) is displayed in the area AR4, and workers can therefore see that the display content of the electronic shelf label 5 was changed after 6:00 PM and before 9:00 PM on a Saturday.

In the above example, graphics were displayed on the display component 51 as the display-change notifications, but characters or symbols may also be displayed, and characters, symbols, and graphics may also be displayed in combination. In other words, at least one of a character, a symbol, or a graphic may be displayed as the display-change notification.

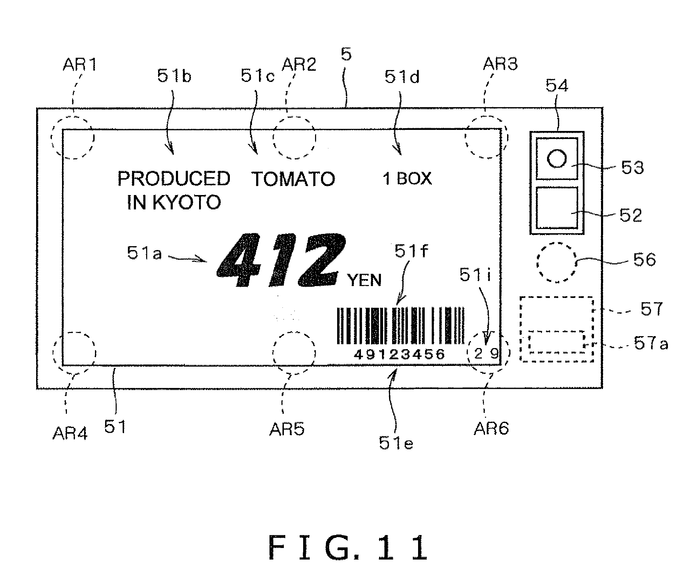

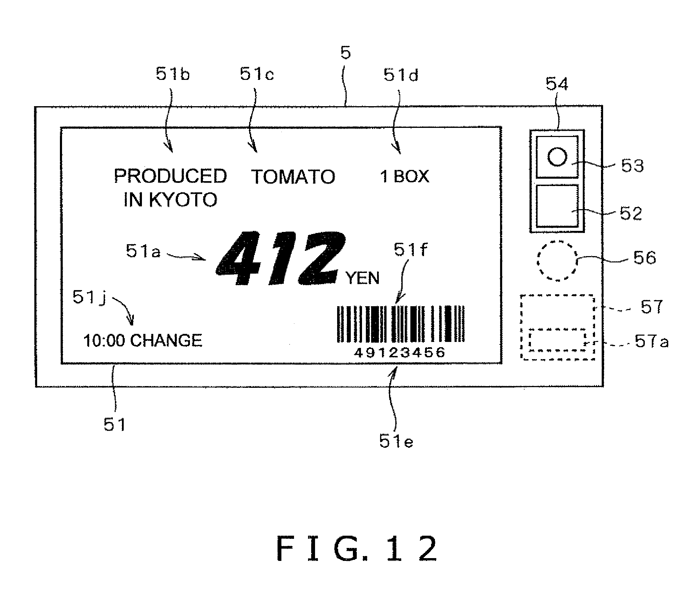

FIG. 11 and FIG. 12 are figures that show examples of displays on the display component 51 when display-change notifications are displayed by displaying characters. In the example in FIG. 11, the day of the month on which the display is changed is displayed by digits 5 li (characters representing numbers) in the area AR6. A worker looking at the display in FIG. 11 can see that the display content of the electronic shelf label 5 was changed after 12:00 AM and before 9:00 AM on the 29th of the month. In the example in FIG. 12, the character string 51j combining the time that the display content was changed and the character string "changed" is displayed. A worker looking at the display in FIG. 12 can see that the display content of the electronic shelf label 5 was changed at 10 o'clock.

Instead of displaying display-change notifications by displaying at least one of characters, symbols, or graphics, the display component 51 may display display-change notifications by inverting or flashing at least part of the changed display content. For example, the display of the changed sales price may be flashing, or if the display component 51 is a display component that involves monochromatic displays, the white-on-black of the changed sales price may be inverted.

As noted above, in the present embodiment, the display component 51 displays the display-change notification for notification of display changes. In other words, the display component 51 functions as notification device for visually notifying the outside of its own changes in display content. Workers can thus check the display of an electronic shelf label 5 to easily ascertain whether or not the display content on that electronic shelf label 5 has actually been changed. It is thus possible to prevent workers from again changing displays even though the display has already been changed, and to prevent displays from being left unchanged on electronic shelf labels 5 as a result of mistake in the change of display.

As illustrated with reference to FIGS. 8 through 11, the display component 51 uses different display modes (output modes) for displaying display-change notifications according to the time or day on which the display content was changed. In other words, in this embodiment, the display component 51 uses different visual output modes to display the display-change notification according to the time or day on which the display content was changed. Thus, not only were display contents changed, but the time or day on which the display content was changed can be easily identified.

In the above examples, image data showing images displayed by the electronic shelf labels 5 is produced in the distribution device 40, but the electronic shelf labels 5 may also produce image data showing images which they themselves display. In such cases, the electronic shelf label 5 is provided with a timer that keeps the current time, and the distribution device 40 transmits display instruction data for instructing the display-change notification to be displayed along with the new product data from. When the new product data and the display instruction data are received from the distribution device 40, the control component 57 of the electronic shelf label 5 obtains the current time from the timer and uses it as the display change time. The control component 57 produces image data showing images such as in FIG. 8 or FIG. 9 according to the display change time, and controls the display component 51 based on that image data. The display component 51 thus changes display by displaying the new product data, and displays the display-change notification. The electronic shelf label 5 may display the display-change notification on its own when it receives new product data without the above display instruction data being transmitted from the distribution device 40.

The image data for the images displayed on dot matrix types of displays generally involves far greater data volume compared to the volume involved for segment type display. Therefore, when the image data for images displayed by an electronic shelf label 5 is transmitted, as noted above, from the distribution device 40 to that electronic shelf label 5, which has a dot matrix type of display component 51, the communication between the distribution device 40 and electronic shelf label 5 takes a longer time. It may thus take a relatively long time until the sales price on the electronic shelf label 5 is actually updated after a worker has operated the data processing terminal 180 to update the sales price on the electronic shelf label 5. Thus, when the sales prices displayed on numerous electronic shelf labels 5 are updated, it will take an extremely long time until the displays are changed on all the electronic shelf labels 5 in cases where the displays on subsequent electronic shelf labels 5 are changed after it has been verified that the display on a certain electronic shelf label 5 has actually been changed.

To improve working efficiency, in cases where displays are sequentially changed on numerous electronic shelf labels 5, it is collectively confirmed whether or not the displays on numerous electronic shelf labels 5 have been changed after all the changes in display on the numerous electronic shelf labels 5 have been completed.

In such cases, when the electronic shelf labels 5 do not display display-change notifications, unlike in the present embodiment, it cannot be easily ascertained, by looking at the display, whether or not the display has actually changed because a relatively long time passes after the completion of the operations involved in the first electronic shelf label 5 in which the display is changed. The invention of the present application is particularly effective in such cases. Each of the electronic shelf labels 5 displays a display-change notification and thereby makes it possible to easily ascertain whether or not the display content has actually changed by checking even the display of the first electronic shelf label 5 in which the display content was changed. The working efficiency involved in changing the display on numerous electronic shelf labels 5 is vastly improved.

In the above example, the product code and change in sales price which have been input to the data processing terminal 180 are transmitted from the data processing terminal 180 to the POS server 31, but may also be transmitted to the store controller 2 or ESL server 10. When the product code and change in sales price are transmitted to the store controller 2, the product code and change in sales price are transmitted from the store controller 2 to the POS server 31. When the product code and change in sales price are transmitted to the ESL server 10, the ESL server 10 updates the product file 101 based on the product code and change in sales price from the data processing terminal 180, and transmits the product code and change in sales price to the POS server 31. The POS server 31 updates the product master 301 based on the product code and change in sales price from the ESL server 10.

### DELETING DISPLAYS OF DISPLAY-CHANGE NOTIFICATIONS

The display-change notifications displayed by the electronic shelf labels 5 are displays intended for workers, and are unnecessary for customers (consumers) purchasing the item of product 6. When such unnecessary displays last a long time, customers may feel the display presented by the electronic shelf label 5 is strange, and may become confused when purchasing the item of product 6.

The display-change notification on the electronic shelf label 5 may therefore be displayed for a certain period of time, or it may be deleted at a prescribed time. It is thus possible to prevent incessant displays of display-change notifications on the electronic shelf labels 5, and to prevent incessant notification that is not necessary for individuals who are not workers doing the change in display on the electronic shelf labels 5. It is thus possible to avoid confusing individuals who are not workers involved in the display on the electronic shelf labels 5.

When notifications of changes in display on electronic shelf labels 5 are displayed for a certain period of time, the ESL server 10, for example, is provided with a counter, and the counter counts a certain period of time, such as 30 minutes, from the transmission of the image data to the electronic shelf label 5 in the above step s7. When the certain period of time is counted by the counter, the CPU 11 produces image data for an image in which the display-change notification is deleted from the image currently displayed by the electronic shelf label 5, and transmits the image data to the electronic shelf label 5. The electronic shelf label 5 then controls the display component 51 based on the newly transmitted image data. Accordingly, the display component 51 displays the images in which the display-change notification in the display images of FIGS. 8 through 12 have been deleted, such as images in which graphics 51g and 51h have been deleted, and the notification to the outside of the change in display on the electronic shelf label 5 is terminated. It is thus possible to prevent incessant notification of display changes, to prevent incessant notification that is meaningless to individuals for whom notification of display changes is unnecessary, and to prevent confusion in individuals for whom notification of display changes is unnecessary.

On the other hand, when image data is produced in the electronic shelf label 5, the electronic shelf label 5 may be provided with a counter for counting a certain period of time from the display of a display-change notification, and the display of the display-change notification may be deleted when a certain period of time has passed since the display of the display-change notification.

In cases where the display of a display-change notification on the electronic shelf label 5 is deleted at a prescribed time, after step s7 described above was implemented, when the current time in the timer of the ESL server 10 reaches the prescribed time, the CPU 11 produces image data for an image in which the display of the display-change notification is deleted from the image currently displayed by the electronic shelf label 5, and the data is transmitted to the electronic shelf label 5. The electronic shelf label 5 then controls the display component 51 based on the newly transmitted image data. The display of the display-change notification is thus deleted on the display screen of the display component 51, and the notification to the outside of the change in display on the electronic shelf label 5 is terminated at the prescribed time. It is thus possible to prevent incessant notification of display changes, to prevent incessant notification that is meaningless to individuals for whom notification of display changes is unnecessary, and to prevent confusion in individuals for whom notification of display changes is unnecessary.

On the other hand, in cases where the image data is produced in the electronic shelf label 5, the display of the display-change notification may be deleted when the current time in the timer provided in the electronic shelf label 5 reaches the prescribed time.

In cases where the display of the display-change notification on the electronic shelf label 5 is thus deleted at the predetermined time, the display of the display-change notification on the electronic shelf label 5 is deleted at the predetermined time during the night every day, thereby allowing workers to easily ascertain whether the display content was changed on that day or the day before when the sales prices on the electronic shelf labels 5 are changed at the same times each day by a timer service or the like, even when notifications of changes in display are displayed as in FIGS. 8 and 9 above.

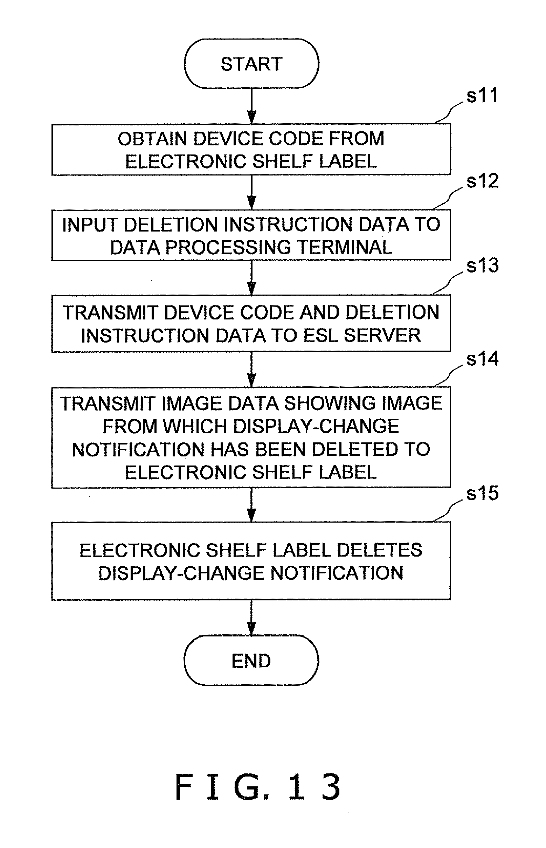

Workers can also operate the data processing terminal 180 to delete displays of display-change notifications on the electronic shelf labels 5. In other words, workers can operate the data processing terminal 180 to terminate display-change notifications on the electronic shelf labels 5. FIG. 13 is a flow chart showing the operation of the electronic shelf label system 1 related to the present embodiment in such cases. In the following description, the electronic shelf label 5 for which the display of the display-change notification is to be deleted will be referred to below as the "electronic shelf label 5 targeted for deletion."

First, when a worker undertakes the predetermined operation of the input component 184 of the data processing terminal 180 (e.g., inputting termination instruction), the input component 184 inputs the operating data to the CPU 181. The CPU 181 then sets the processing mode of the data processing terminal 180 to "display deletion mode" for deleting the display of the display-change notification on the electronic shelf label 5 targeted for deletion.

The device code is then obtained from the electronic shelf label 5 targeted for deletion and is input to the data processing terminal 180 (step s11). As a method for obtaining the device code from the electronic shelf label 5 targeted for deletion, a label on which the device code has been pre-printed with a bar code is applied to each of the electronic shelf labels 5, and the bar code on the label attached to the electronic shelf label 5 targeted for deletion is read by the bar code reader 185 of the data processing terminal 180. As another method, the remote control 160 is used to switch the display screen of the electronic shelf label 5 targeted for deletion from the screen displaying the product data as in FIG. 5 to a screen on which the device code is displayed with a bar code, and the bar code displayed on the electronic shelf label 5 targeted for deletion is read by the bar code reader 185 of the data processing terminal 180. The device code obtained by the bar code reader 185 is input to the CPU 181.

When the worker then inputs the deletion instruction data (termination instruction) to the input component 184 of the data processing terminal 180, the input component 184 receives the input and inputs the deletion instruction data to the CPU 181 (Step s12). As used here, the deletion instruction data is data instructing to delete or terminate the display of the display-change notification on the electronic shelf label 5. In other words, the deletion instruction data is data instructing to terminate the notification of the change in display on the electronic shelf label 5. The device code and deletion instruction data input to the CPU 181 are transmitted from the wireless LAN communications component 186 functioning as a transmission component through the AP 170 to the ESL server 10 (step s13).

In the ESL server 10, the device code and the deletion instruction data from the data processing terminal 180 are received by the data communications component 17 and input to the CPU 11. The CPU 11 produces image data showing an image in which the display of the display-change notification on the display screen of the electronic shelf label 5 targeted for deletion, which has the input device code, is deleted, and transmits transmission data including the image data and the input device code through the communications devices 4 (step s14).

When the device code in the transmission data from the ESL server 10 matches the device code stored in the memory 57a, the control component 57 of the electronic shelf label 5 targeted for deletion obtains the image data in the transmission data. The control component 57 then controls the display component 51 based on the image data that has been obtained. The display of the display-change notification in the electronic shelf label 5 is thus deleted in response to instructions from the ESL server 10. In other words, notifications of changes in display on the electronic shelf labels 5 are terminated in response to instructions from the ESL server 10.

When image data is produced in the electronic shelf labels 5, the ESL server 10 may transmit transmission data including the device codes and deletion instruction data from the data processing terminal 180 through the communications devices 4. In such cases, when the deletion instruction data in the transmission data from the ESL server 10 is obtained, the electronic shelf label 5 targeted for deletion produces image data for an image in which the current display of the display-change notification on the display screen is deleted, and controls the display component 51 based on that image data.

Also, when image data is produced by the electronic shelf label 5, the deletion instruction data may be directly transmitted from the data processing terminal 180 to the electronic shelf label 5 targeted for deletion. In such cases, infrared signals including the deletion instruction data are transmitted from the infrared communications component 187 of the data processing terminal 180, and the infrared signals are received by the light-receiving component 53 of the electronic shelf label 5 targeted for deletion. The control component 57 of the electronic shelf label 5 targeted for deletion obtains the deletion instruction data in the infrared signals received by the light-receiving component 53, and the display of the display-change notification on the display component 51 is then deleted.

The prescribed signals can thus be input from outside the electronic shelf label 5 to the electronic shelf label 5 to delete the display of the display-change notification on the electronic shelf label 5. In other words, the prescribed signals can be input from outside the electronic shelf label 5 to the electronic shelf label 5 to terminate notifications of changes in display on the electronic shelf label 5.

### OTHER MODIFIED EXAMPLES

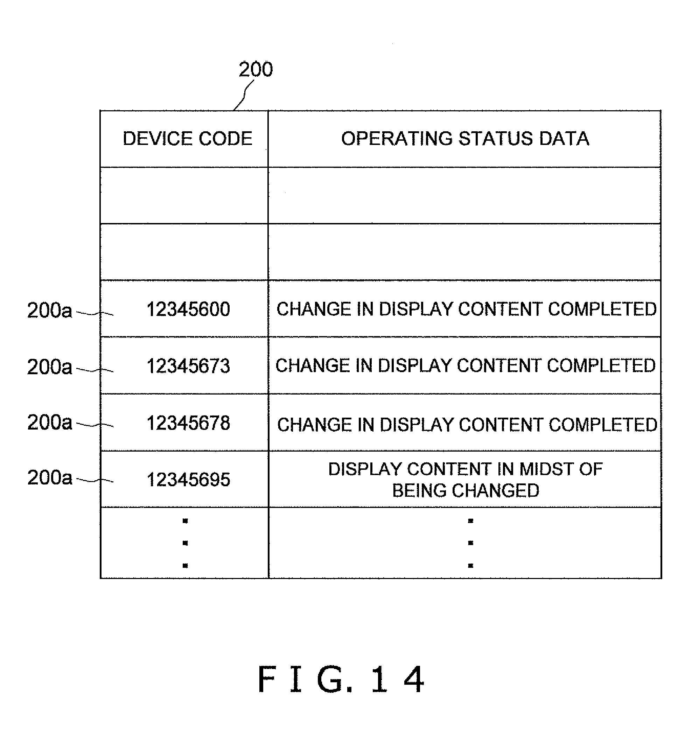

A list file (referred to below as "change verification list file") 200 for verifying whether or not the display on a electronic shelf label 5 has changed may be produced in the ESL server 10 to allow workers to check the contents of the change verification list file 200 with the ESL server 10. FIG. 14 shows an example of the change verification list file 200. As shown in FIG. 14, the change verification list file 200 is, for example, a file in table format in which, in each record 200a, the device codes of electronic shelf labels 5 are registered in association with operating status data showing the status of display changes in those electronic shelf labels 5. An example of a method for producing the change verification list file 200 is described below.

During the price update process as in FIG. 7, after step s7 has been implemented, the CPU 11 of the ESL server 10 produces a record 200a associating the device code of the target electronic shelf label 5 with operating status data showing that the display on the target electronic shelf label 5 is in the midst of being changed, and registers the record in the change verification list file 200. After step s8 has been implemented, when the ESL server 10 receives the ACK data from the target electronic shelf label 5, the CPU 11 rewrites the operating status data in such a way that the operating status data in the record 200a corresponding to the target electronic shelf label 5 in the change verification list file 200 shows that the change in display has been completed. Every time a new attempt is made to update the display sales price on an electronic shelf label 5, a record 200a showing the new display change operating status of the electronic shelf label 5 is thus produced and registered in the change verification list file 200. The contents of the change verification list file 200 can be displayed on the display 15 or printed out on a printer provided to the ESL server 10, thereby allowing a worker to verify at a glance whether or not the display sales price update has been completed and whether or not the display change has been completed on all target electronic shelf labels 5. It is thus possible to ensure that no work is overlooked.

When, as a result of defective communication between the distribution device 40 and target electronic shelf labels 5, the ESL server 10 does not receive ACK data from a target electronic shelf label 5 after step s8 has been implemented, the change in display on the target electronic shelf label 5 will not be complete, and the operating status data in the record 200a corresponding to the target electronic shelf label 5 will show that the display is in the midst of being changed.

The change verification list file 200 may also be produced by the data processing terminal 180, and workers can verify the contents of the change verification list file 200 using the data processing terminal 180.

During the price update process as in FIG. 7, before step s3 has been implemented, the data processing terminal 180 obtains the device code from the target electronic shelf label 5 in the same manner as in step s11 above, and after step s3 has been implemented, the CPU 181 of the data processing terminal 180 produces a record 200a associating the device code of the target electronic shelf label 5 with operating status data showing that the display on the target electronic shelf label 5 is in the midst of being changed, and registers the record 200a in the change verification list file 200 in the memory component 182. After step s8 has been implemented, the ESL server 10, which has received the ACK data from the target electronic shelf label 5, notifies the data processing terminal 180 that the change in display on the target electronic shelf label 5 is complete. The CPU 181 in the data processing terminal 180, which has received the notification, rewrites the operating status data in such a way that the operating status data in the record 200a corresponding to the target electronic shelf label 5 in the change verification list file 200 in the memory component 182 shows that the change in display is complete.

The contents of the change verification list file 200 produced in this way can be displayed on the display 183 of the data processing terminal 180 or printed out on a printer connected to the data processing terminal 180, thereby allowing a worker to verify at a glance whether or not the change in display has been completed on all target electronic shelf labels 5.

### SECOND EMBODIMENT

An electronic display system used in a plant for manufacturing goods, specifically, a work support system configured to support work in various work processes at a manufacturing plant using electronic display media, is described in the present embodiment.

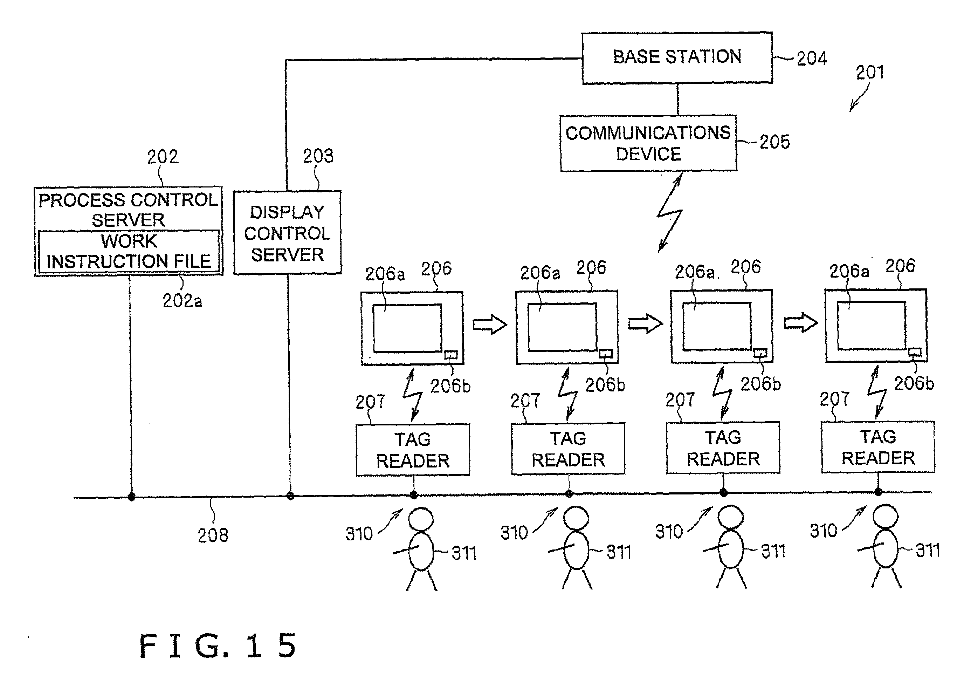

FIG. 15 shows the structure of a work support system 201 related to the present embodiment. As shown in FIG. 15, the work support system 201 related to the present embodiment comprises a process control server 202, a display control server 203, a base station 204, a communications device 205, a plurality of electronic display media 206, and a plurality of tag readers 207. The process control server 202, the display control server 203, and the plurality of tag readers 207 are connected to each other through a network 208 such as an LAN.

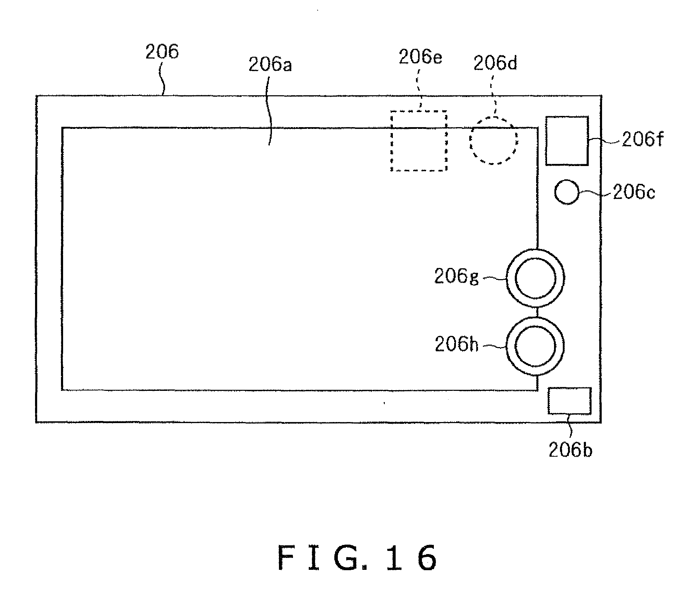

FIG. 16 shows the structure of the electronic display medium 206. The electronic display medium 206 has a display component 206a, an IC tag 206b, a light-emitting component 206c, a communications component 206f, and operating buttons 206g and 206h. The display component 206a, the IC tag 206b, the light-emitting component 206c, the communications component 206f, and the operating buttons 206g and 206h are arranged on the front surface of the electronic display medium 206. The electronic display medium 206 is also provided with a control component 206e, and a sound-producing component 206d. The control component 206e is configured to comprehensively control the operation of the device as a whole.

The IC tag 206b stores identification data for identifying the electronic display medium 206 to which the IC tag 206b itself belongs. In the present embodiment, unique identification data is assigned to each of the plurality of electronic display media 206. Each electronic display medium 206 stores the identification data assigned to itself in the IC tag 206b as display medium identification data. The IC tag 206b transmits the display medium identification data which is stored in the IC tag 206b to a tag reader 207 targeted for communication.

The display component 206a is a dot matrix type of nonvolatile display component. The display component 206a is composed of electronic paper, for example. The light-emitting component 206c is composed of an LED, for example. The sound-producing component 206d is composed of a speaker, for example. As will be described below, when the display on the display component 206a is changed in the present embodiment, light is output from the light-emitting component 206c and sound is output from the sound-producing component 206d to issue a notification of the change to the outside of the electronic display medium 206. In other words, the light-emitting component 206c functions as notification device for issuing a visual notification output to the outside of changes in display on the electronic display medium 206. And the sound-producing component 206d functions as notification device for issuing an auditory notification output to the outside of changes in display on the electronic display medium 206 in the same manner as the display component 51 of the electronic shelf label 5 in the first embodiment above. Workers 311 (see FIG. 15) can thus easily ascertain that the display on the electronic display media 206 has changed.

The control component 206e is composed of a CPU, a memory, and the like. The control component 206e controls the other structural elements of the electronic display medium 206. The control component 206e stores display medium identification data assigned to the electronic display medium 206 to which the control component 206e itself belongs in the same manner as the IC tag 206b.

The operating buttons 206g and 206h function as operating components by which the workers 311 input instructions to the electronic display medium 206. When the operating buttons 206g and 206h are operated by a worker 311, operating data is input to the control component 206e. The control component 206e changes the display on the display component 206a, for example, in response to the input operating data. The communications component 206f carries out wireless communication such as radio wave or infrared communication with an external device. When the communications component 206f receives data from the external device, the data is input to the control component 206e. The control component 206e changes the display on the display component 206a, for example, in response to the input data. The data produced by the control component 206e is transmitted through the communications component 206f to the external device.

The electronic display medium 206 is also provided with a plurality of batteries (not shown). Each of the structural components such as the display component 206a or control component 206e can operate on the basis of the power supplied by the batteries.

The work support system 201 related to the present embodiment is composed in such a way that each of the electronic display media 206 sequentially moves through a plurality of work stations 310 (see FIG. 15). The electronic display media 206 display the work details for the work processes carried out at the work stations 310 where the electronic display media 206 are currently located. When the electronic display media 206 move to the next work station 310 at the end of the work process, the work details for the work stations 310 to which the electronic display media 206 are moving are displayed on the display component 206a. The workers 311 at work stations 310 are thus given work instructions by the arriving electronic display media 206, and work according to the work details displayed on the electronic display media 206. The electronic display media 206 are attached to containers on which are mounted work objects such as goods which are to be processed, for example. The containers are conveyed by a conveyor or the like to the work stations 310, thereby sequentially moving through a plurality of work stations 310. When an electronic display medium 206 attached to a container on which one work object is mounted moves from one work station 310 to the next work station 310, the electronic display medium 206 attached to the container on which the next work object is mounted will move to the one work station 310. The electronic display media 206 may also be directly attached to the work objects.

The plurality of tag readers 207 each individually correspond in a one-to-one manner to the plurality of work stations 310. Each tag reader 207 is placed at its corresponding work station 310. When an electronic display medium 206 moves to a work station 310, the IC tag 206b of that electronic display medium 206 communicates with the tag reader 207 located at that work station 310, and transmits the display medium identification data which the IC tag 206b itself stores to that tag reader 207.

In the present embodiment, unique identification data (referred to below as "tag reader identification data") is assigned to each of the plurality of tag readers 207 in the same manner as the electronic display media 206. Each tag reader 207 stores the tag reader identification data assigned to it. When a tag reader 207 receives the display medium identification data from the IC tag 206b targeted for communication, the display medium identification data and the tag reader identification data which the reader stores are transmitted through the network 208 to the process control server 202.

The process control server 202 is composed of a common computer. The process control server 202 comprises a CPU, a hard disk, a memory, a display, and the like. The process control server 202 stores work instruction files 202a. The work instruction files 202a show work details for the work processes carried out at each work station 310. The work station 310, the work instruction data showing the work details for the work process at that work station 310, and the tag reader identification data for identifying the tag reader 207 located at that work station 310 are associated with each other in the work instruction files 202a for each work station 310. Thus, when the tag reader identification data for identifying a certain tag reader 207 is revealed, the work instruction file 202a is referenced, thereby making it possible to obtain the work details for the work process carried out at the work station 310 where that tag reader 207 is located.

When the process control server 202 receives tag reader identification data and display medium identification data from a certain tag reader 207, the display medium identification data that has been received is stored in association with the tag reader identification data in the work instruction file 202a which is identical to the simultaneously received tag reader identification data. The work station 310, the work instruction data, the tag identification data, and the display medium identification data are thus stored in association with each other in the work instruction file 202a. When the work instruction file 202a is referenced, it is thus possible to obtain, for the electronic display medium 206 introduced into the manufacturing line, the work station 310 at which the electronic display medium 206 is located and the work details for the work process at that work station 310.

The process control server 202 also obtains, from the work instruction file 202a, the work instruction data for the work process at the work station 310 where the tag reader 207 identified by the tag reader identification data that has been obtained is located. The work instruction data that has been obtained and the display medium identification data that has been received from the tag reader 207 are transmitted through the network 208 to the display control server 203.

In cases where the display medium identification data has already been associated with the tag reader identification data when the process control server 202 attempts to associate the received display medium identification data with the tag reader identification data in the work instruction file 202a, the already associated display medium identification data is replaced by the display medium identification data for which association is being attempted.

The display control server 203 is composed of a common computer in the same manner as the process control server 202. The display control server 203 comprises a CPU, a hard disk, a memory, a display, and the like. The display control server 203 produces transmission signals including the work instruction data and the display medium identification data received from the process control server 202, and inputs the transmission signals to the base station 204.

The base station 204 functions as a repeater device between the display control server 203 and the communications device 205. The base station 204 outputs transmission signals from the display control server 203 to the communications device 205, or to outputs transmission signals from the electronic display medium 206, which are output from the communications device 205, to the display control server 203.

The communications device 205 is capable of wireless communication with the communications component 206f of each electronic display medium 206. The communications device 205 transmits the transmission signals input from the base station 204 to each of the electronic display media 206, or receives the transmission signals from the electronic display media 206 and outputs them to the base station 204.

The control component 206e in the electronic display medium 206 compares the display medium identification data which the electronic display medium 206 itself stores and the display medium identification data included in the transmission signals received by the communications component 206f. When both sets of display medium identification data match each other, the control component 206e determines that the transmission signals received by the communications component 206f are signals intended for its own device, and the work instruction data included in the transmission signals is stored in memory. On the other hand, when both sets of display medium identification data do not match each other, the control component 206e determines that the transmission signals received by the communications component 206f are signals intended for another electronic display medium 206, and discards the transmission signals. When the work instruction data is stored in memory, the control component 206e controls the display component 206a to display the work instruction data in the memory on the display component 206a. The electronic display medium 206 thus displays the work details corresponding to the work station 310 where it is located. Workers 311 can thus easily perform work based on work details displayed on the nearby electronic display medium 206.

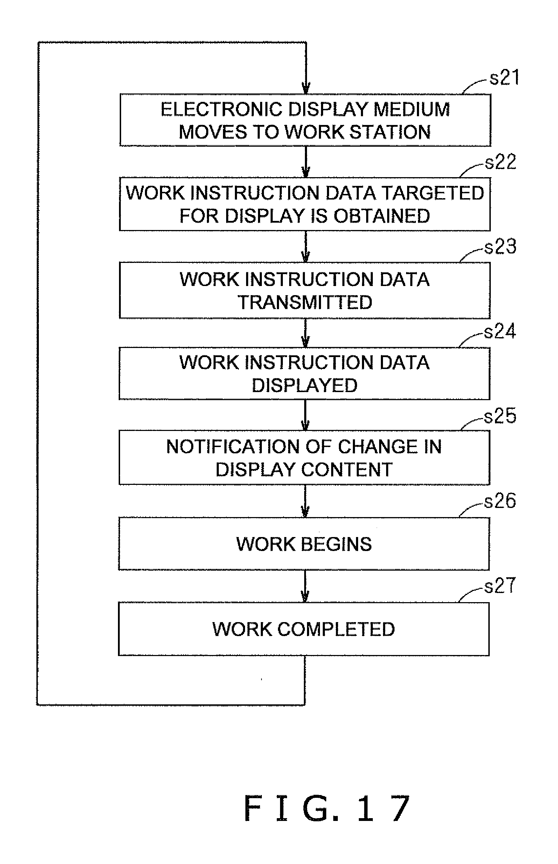

The following is a description of the operation of the present work support system 201 until the display of the electronic display medium 206 changes after the electronic display medium 206 has moved to a new work station 310 and the electronic display medium 206 then moves to the next new work station 310. FIG. 17 is a flow chart for illustrating these operations. The electronic display medium 206 being described is referred to below as the "target electronic display medium 206."

As shown in FIG. 17, when the target electronic display medium 206 attached to a container such as a tray is conveyed along with the container to a new work station 310 by conveying means such as a conveyor in step s21, the work instruction data newly displayed on the target electronic display medium 206 is obtained from the work instruction file 202a by the process control server 202 in step s22. In step s22, the display medium identification data for identifying the target electronic display medium 206 is first transmitted from the IC tag 206b of the target electronic display medium 206 to the nearby tag reader 207. The tag reader 207 then outputs the received display medium identification data and the tag reader identification data which the tag reader 207 itself stores to the process control server 202. The process control server 202 obtains, from the work instruction file 202a, the work instruction data corresponding to the work station 310 where the tag reader 207 identified by the input tag reader identification data is located. The work details shown by the work instruction data obtained here are the work details that are to be newly displayed on the target electronic display medium 206.

Then, in step s23, the work instruction data obtained in step s22 is transmitted to the target electronic display medium 206. In step s23, the process control server 202 first outputs the work instruction data that has been obtained and the display medium identification data received from the tag reader 207 to the display control server 203. The display control server 203 produces transmission signals including the input work instruction data and display medium identification data, and transmits the signals through the base station 204 and communications device 205 to the target electronic display medium 206.

In the work support system 201 related to the present embodiment, the work instruction data obtained by the process control server 202 is thus distributed to the target electronic display medium 206 through the display control server 203, the base station 204, and the communications device. Therefore, the process control server 202, the display control server 203, the base station 204, and the communications device 205 form a data distribution device for distributing data to the electronic display medium 206.

Then, in step s24, when the display medium identification data included in the received transmission signals matches the pre-stored display medium identification data, the target electronic display medium 206 stores the work instruction data included in the transmission signals. The target electronic display medium 206 displays the stored work instruction data on the display component 206a. The details displayed on the display component 206a of the target electronic display medium 206 are thus changed from the work details corresponding to the previous work station 310 to the work details corresponding to the new work station 310.

When the display content of the target electronic display medium 206 is changed in step s24, the control component 206e in the target electronic display medium 206 causes the light-emission component 206c to emit light for a certain period of time and causes the sound-producing component 206d to produce sound for a certain period of time in step s25. Worker 311 is thus notified in a visual and auditory manner that the display on the target electronic display medium 206 has been changed. The light-emitting component 206c may be operated by itself or the sound-producing component 206d may be operated by itself instead of operating both the light-emitting component 206c and sound-producing component 206d.

In step s25, when notification of the change in display on the target electronic display medium 206 has been issued to the outside and the worker 311 understands that the display on the target electronic display medium 206 has been changed, the worker 311 begins work according to the work details displayed on the target electronic display medium 206 in step s26. When the work is then completed in step s27, step s21 is again implemented, and the target electronic display medium 206 is conveyed to the next new work station 310. The same process is then carried out.

As long as operations are proceeding normally in the work support system 201 related to the present embodiment, when the electronic display medium 206 thus moves to a new work station 310, work details corresponding to the new work station 310 are displayed on the electronic display medium 206, and the details displayed on the electronic display medium 206 are automatically updated.

However, in cases where the work support system 201 malfunctions as a result of defective communication or the like between the communications device 205 and electronic display medium 206, the display details sometimes will not be automatically updated, even when the electronic display medium 206 has been conveyed to a new work station 310.

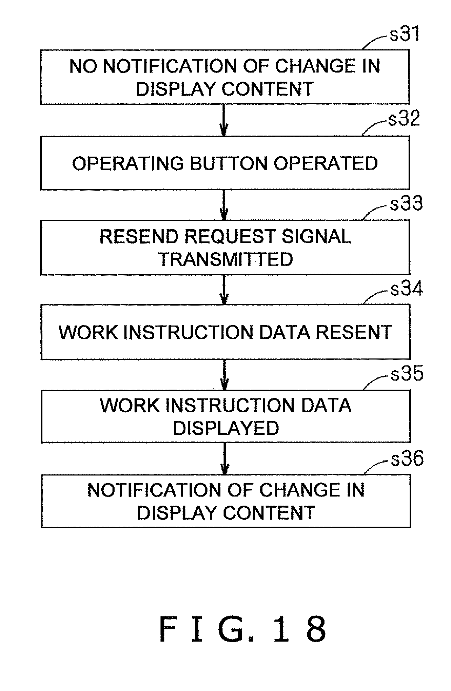

In the work support system 201 related to the present embodiment, the worker 311 can press either one of the operating buttons 206g and 206h, such as the operating button 206g, on the electronic display medium 206 to manually update the display on the electronic display medium 206. The operation of the work support system 201 in cases where the display on the electronic display medium 206 is manually updated will be described below with reference to FIG. 18.

As shown in FIG. 18, in step s31, when the target electronic display medium 206 moves to a new work station 310 yet neither the light-emitting component 206c nor sound-producing component 206d of the target electronic display medium 206 operate and the target electronic display medium 206 does not issue a display-change notification, the worker 311 presses the operating button 206g on the front of the target electronic display medium 206 to manually change the display content on the target electronic display medium 206 in step s32. When the operating button 206g on the target electronic display medium 206 is pressed, operating data is input to the control component 206e in step s33, and the control component 206e produces a resend request signal showing a request to resend the work instruction data. The control component 206e transmits the resend request signal including the stored display medium identification data of its own device to the communications component 206f.

The resend request signals transmitted from the target electronic display medium 206 are input to the display control server 203 through the communications device 205 and base station 204. The display control server 203 outputs the resend request signals that have been received to the process control server 202. The process control server 202 obtains, from the work instruction file 202a, the work instruction data corresponding to the display medium identification data included in the resend request signals that have been received. The work instruction data obtained here is the data that the target electronic display medium 206 could not display. The process control server 202 outputs the work instruction data that has been obtained and the corresponding display identification medium to the display control server 203. The display control server 203 produces transmission signals including the received work instruction data and the display medium identification data, and transmits the transmission signals through the base station 204 and the communications device 205. The work instruction data which the target electronic display medium 206 could not display is thus resent.

When the display medium identification data included in the received transmission signals matches the display medium identification data stored in the target electronic display medium 206, the target electronic display medium 206 displays the work instruction data included in the transmission signals on the display component 206a in step s35. The display on the electronic display medium 206 is thus updated. When the electronic display medium 206 changes the display, light is output from the light-emitting component 206c and sound is output from the sound-producing component 206d in step s36, thereby notifying the worker 311 that the display content has been changed.

As noted above, in the present embodiment, the electronic display medium 206 is provided with notification device, such as the light-emitting component 206c or sound-producing component 206d, for notifying the outside of the change in display on the display component 206a in a visual or auditory manner, thus allowing it to be easily ascertained whether or not the display has actually been changed on the electronic display medium 206. It is thus possible to prevent the display on the electronic display medium 206 from actually being left unchanged as a result of system malfunctions or the like, and to prevent the worker 311 from carry out based on improper work details displayed on the electronic display medium 206. It is also possible to prevent wasted work in which workers 311 operate the operating button 206g to change displays even though the display has already been changed.

### MODIFIED EXAMPLES

In the above examples, the light-emitting component 206c and the sound-producing component 206d were used to notify the outside of changes in display on the display component 206a, but display-change notifications may be displayed on the display component 206a in the same manner as in the first embodiment above to issue a visual notification output of changes in display content using the display component 206a itself in which the display content is changed. The use of the light-emitting component 206c or the sound-producing component 206d for notifications of changes in display content such as in the present embodiment is preferred because the notification of changes in display content using a light-emitting component 206c or a sound-producing component 206d provided separately from the display component 206a which displays work details makes it easier for workers 311 to understand changes in display content.

Also, in the first embodiment above, the electronic shelf labels 5 may be provided with a light-emitting component or a sound-producing component. The control component 57 may issue notifications of changes in display content by causing the light-emitting component to emit light or by causing the sound-producing component to produce sound when the display on the display component 51 is changed. However, since the electronic shelf labels 5 are always exposed to the view of customers (consumers), notifications of changes in display content are preferably issued using only the display component 51, as in the first embodiment, in the electronic shelf label system 1 because customers may become confused or uncomfortable when notifications of changes in display content are issued by means separate from the display component 51 displaying the product data.

In the electronic shelf label 5 according to the first embodiment, the pattern in which light is emitted by the light-emitting component or the pattern in which sound is produced by the sound-producing component may be altered when a light-emitting component or a sound-producing component is used for notification of changes in display content on the display component 51, and different modes may be used for notification of changes in display content according to the time or day on which the display component 51 changes the display content.

As a rule, the display on the electronic display medium 206 is updated automatically in the example above, and workers 311 manually update the display on the electronic display medium 206 only when the system malfunctions, but workers 311 may also always manually update the display on the electronic display medium 206. The operation of the work support system 201 in such cases is described below.

A worker 311 presses the operating button 206g on a target electronic display medium 206 when the target electronic display medium 206 is conveyed to the work station 310 where the worker is located. When the operating button 206g on the target electronic display medium 206 is pressed, the control component 206e produces a transmission request signal indicating a request for the transmission of work instruction data, the display medium identification data of the device is included in the transmission request signal, and the transmission request signal is output to the communications component 206f. The transmission request signal transmitted from the electronic display medium 206 is input to the display control server 203 through the communications device 205 and the base station 204.

The display control server 203 outputs the transmission request signals that have been transmitted from the electronic display medium 206 to the process control server 202. In the process control server 202, the display medium identification data received from the tag reader 207 is stored, in association with the tag reader identification data that is identical to the tag reader identification data received at the same time as the display medium identification data, in the work instruction file 202a. The process control server 202 obtains, from the work instruction file 202a, the work instruction data corresponding to the display medium identification data included in the transmission request signals that have been received. The work instruction data obtained here is the data to be displayed on the target electronic display medium 206. The process control server 202 outputs the work instruction data that has been obtained and the corresponding display medium identification data to the display control server 203. The display control server 203 produces transmission signals including the received work instruction data and display medium identification data, and transmits the transmission signals through the base station 204 and the communications device 205.

When the display medium identification data included in the received transmission signals matches the display medium identification data stored in the electronic display medium 206, the electronic display medium 206 displays the work instruction data included in the transmission signals on the display component 206a. The display on the electronic display medium 206 is thus updated.

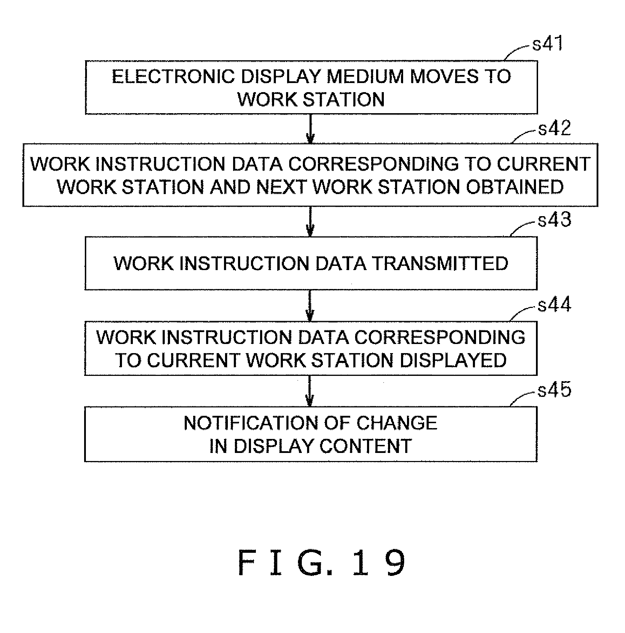

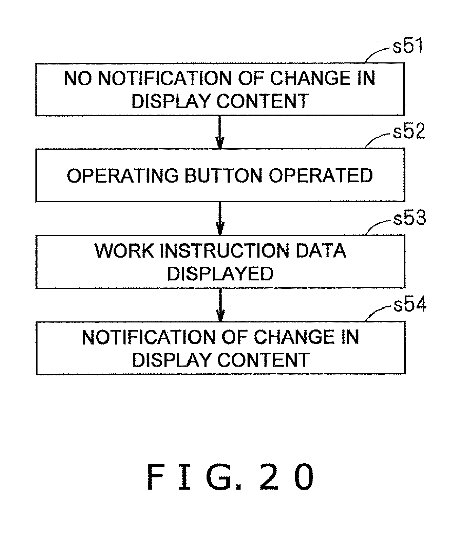

In the example above, when the electronic display medium 206 moves to a new work station 310, only the work instruction data corresponding to that work station 310 is transmitted to the electronic display medium 206. However, the work instruction data corresponding to the next work station 310 to which the electronic display medium 206 will move may also be transmitted along with the work instruction data corresponding to the work station 310 where the electronic display medium 206 is currently located to the electronic display medium 206. In such cases, even though the electronic display medium 206 conveyed to a new work station 310 cannot receive data from the display control server 203, as long as the electronic display medium 206 has received data from the display control server 203 at the previous work station 310, the electronic display medium 206 will store the work instruction data corresponding to the work station 310 where it is currently located, and can therefore use the work instruction data to display the work details corresponding to the work station 310 where it is currently located. The operation of the work support system 201 in such cases is described below with reference to FIG. 19 and FIG. 20.

As shown in FIG. 19, when the target electronic display medium 206 moves to a new work station 310 in step s41, the work instruction data corresponding to the work station 310 where the target electronic display medium 206 is currently located and the work instruction data corresponding to the work station 310 to which the target electronic display medium 206 will move next are obtained from the work instruction file 202a in the process control server 202 in step s42. In step s42, the display medium identification data is first transmitted from the IC tag 206b of the target electronic display medium 206 to the nearby tag reader 207. The tag reader 207 outputs the received display medium identification data and the tag reader identification data which the tag reader 207 itself stores to the process control server 202. The process control server 202 obtains, from the work instruction file 202a, the work instruction data corresponding to the work station 310 where the tag reader 207 identified by the input tag reader identification data is located. The work instruction data obtained here is the work instruction data corresponding to the work station 310 where the target electronic display medium 206 is currently located. The process control server 202 furthermore obtains, from the work instruction file 202a, the work instruction data corresponding to the next work station 310 to which the target electronic display medium 206 will then move. Because the process control server 202 stores data showing the order in which the electronic display medium 206 will move between the plurality of work stations 310, when the work station 310 where the electronic display medium 206 is currently located is identified, the next work station 310 to which the electronic display medium 206 will move can be identified, and the work instruction data corresponding to that work station 310 can be obtained from the work instruction file 202a.

Then, in step s43, the two sets of work instruction data obtained in step s42 are transmitted to the target electronic display medium 206. In step s43, the process control server 202 first outputs the two sets of work instruction data that have been obtained and the display medium identification data received from the tag reader 207 to the display control server 203. The display control server 203 produces transmission signals including the two sets of input work instruction data and the display medium identification data, and transmits the signals through the base station 204 and communications device 205 to the target electronic display medium 206.

Then, in step s44, when the display medium identification data included in the received transmission signals matches the pre-stored display medium identification data, the target electronic display medium 206 stores the two sets of work instruction data included in the transmission signals. The target electronic display medium 206 stores the work instruction data corresponding to the work station 310 where it is currently located as on-screen data, and stores the work instruction data for the next work station 310 to which it will move as off-screen data. The target electronic display medium 206 displays the on-screen data on the display component 206a. Then, in step s45, the target electronic display medium 206 causes the light-emitting component 206c to emit light for a certain period of time and causes the sound-producing component 206d to produce sound for a certain period of time.

By doing the above, the target electronic display medium 206 displays the work instruction data corresponding to the work station 310 where it is currently located, and stores the work instruction data corresponding to the next work station 310 to which it will move as off-screen data.

When the target electronic display medium 206 moves to a new work station 310 yet neither the light-emitting component 206c nor the sound-producing component 206d of the target electronic display medium 206 operate and the target electronic display medium 206 does not issue a display-change notification (step s51 in FIG. 20), the worker 311 presses the operating button 206g on the target electronic display medium 206 to manually change the display content on the target electronic display medium 206 in step s52. When the operating button 206g on the target electronic display medium 206 is pressed, the control component 206e displays the stored off-screen data (work instruction data) on the display component 206a in step s53. The work instruction data corresponding to the new work station 310 can thus be displayed on the target electronic display medium 206 even when the target electronic display medium 206 which has moved to the new work station 310 cannot receive data from the display control server 203. When the target electronic display medium 206 displays the off-screen data, the light-emitting component 206c and the sound-producing component 206d are used to notify the worker 311 that the display content has been changed in step s54.

In the example above, the notification of the change in display on the electronic display medium 206 was terminated in a certain period of time by emitting light on the light-emitting component 206c for only a certain period of time or by producing sound on the sound-producing component 206d for only a certain period of time, but the portable data processing terminal may be used to terminate the notification of changes in display content on the electronic display medium 206 in the same manner as in the first embodiment. In such cases, instruction data for instructing that the notification of changes in display content is to be terminated may be directly input from the data processing terminal to the electronic display medium 206, and may be first input from the data processing terminal to the process control server 202 or the display control server 203 and input through the base station 204 and the communications device 205 to the electronic display medium 206.

The portable data processing terminal may also be used in the same manner as in the first embodiment to allow the work instruction data displayed by the electronic display medium 206 to be changed. For example, a LAN network 208 may be provided with an access point to allow the data processing terminal to connect to the access point in the same manner as in the first embodiment. The input component of the data processing terminal is then used to input the work instruction data and the display medium identification data of the electronic display medium 206 targeted for the change in display to the data processing terminal. The work instruction data and display medium identification data are then transmitted from the data processing terminal through the access point to the process control server 202. The process control server 202 updates the work instruction file 202a based on the received work instruction data and display medium identification data, and transmits the received work instruction data and display medium identification data through the display control server 203, the base station 204, and the communications device 205 to the target electronic display medium 206. The work instruction data input to the data processing terminal is thus displayed on the target electronic display medium 206.

In the example above, a tag reader 207 is located at each working station 310, and the electronic display medium 206 is provided with an IC tag 206b, whereby the work station 310 at which the electronic display medium 206 is currently located is identified. However, other methods may be used to identify the work station 310 where the electronic display medium 206 is currently located. For example, a GPS receiver may be mounted on the electronic display medium 206, and the location data output from the GPS receiver may be used to identify the work station 310 where the electronic display medium 206 is currently located.

The first embodiment above illustrated a case in which the electronic display system related to the invention of the present application is adapted to a store data system 100 introduced in a store, and the second embodiment illustrated a case in which the electronic display system related to the invention of the present application is adapted to a work support system 201 introduced in a manufacturing plant. However, the electronic display system related to the invention of the present application may also be applied to other systems. For example, the invention of the present application may be applied to a railway system to display notifications of changes in display content on advertising electronic display media located in trains.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. An electronic display medium comprising:
a display component configured to display a display content; and
a notification device configured to issue at least one of a visual notification output and an auditory notification output indicative of a display change on the display component to a user of the electronic display medium when the display content displayed on the display component is updated.

2. The electronic display medium according to claim 1, wherein
the notification device includes a light-emitting component and a sound-producing component, the notification device being configured to issue the at least one of the visual notification output and the auditory notification output, when the display content on the display component is updated, by at least one of
displaying a display-change notification on the display component,
emitting light from the light-emitting component, and
producing a sound from the sound-producing component.

3. The electronic display medium according to claim 2, wherein
the notification device is configured to issue the visual notification output by displaying on the display component the display-change notification including at least one of a character, a symbol, and a graphic.

4. The electronic display medium according to claim 2, wherein
the notification device is configured to issue the visual notification output by inverting or flashing at least part of the display content displayed on the display component.

5. The electronic display medium according to any one of claims 1 to 4, wherein
the notification device is configured to change an output mode of the at least one of the visual notification output and the auditory notification output depending on at least one of time and day on which the display content on the display component is updated.

6. The electronic display medium according to any one of claims 1 to 5, wherein
the notification device is configured to maintain the at least one of the visual notification output and the auditory notification output over a prescribed period of time after the display content on the display component is updated, or to terminate the at least one of the visual notification output and the auditory notification output at a predetermined timing after the display content on the display component is updated.

7. The electronic display medium according to any one of claims 1 to 6, wherein
the notification device is configured to terminate the at least one of the visual notification output and the auditory notification output when a predetermined signal is input from outside the electronic display medium to the electronic display medium.

8. An electronic display system comprising:
an electronic display medium configured to display a display content; and
a data distribution device configured to distribute data relating to the display content to the electronic display medium,
the electronic display medium being configured to change the display content based on the data distributed from the data distribution device, and to issue at least one of a visual notification output and an auditory notification output indicative of a display change on the electronic display medium to a user when the display content displayed on the electronic display medium is updated.

9. The electronic display system according to claim 8, further comprising
a portable data processing terminal including
an operating component configured to receive an input of updated data relating to an updated display content to be displayed on the electronic display medium, and
a transmitting component configured to transmit the updated data to the data distribution device,
the data distribution device being configured to distribute the updated data to the electronic display medium,
the electronic display medium being configured to display the updated display content according to the updated data, and to issue the at least one of the visual notification output and the auditory notification output indicative of the display change on the electronic display medium.

10. The electronic display system according to claim 9, wherein
the operating component of the portable data processing terminal is configured to receive a termination instruction for instructing that the at least one of the visual notification output and the auditory notification output by the electronic display medium is to be terminated,
the transmission component of the portable data processing terminal is configured to transmit the termination instruction to one of the data distribution device and the electronic display medium, and
the electronic display medium is configured to terminate the at least one of the visual notification output and the auditory notification output when the termination instruction is received from the operating component or the data distribution device.
